(19) Europäisches Patentamt
European Patent Office
Office européen des brevets

(11) **EP 0 979 026 B1**

## (12) EUROPEAN PATENT SPECIFICATION

(45) Date of publication and mention
of the grant of the patent:
**09.03.2005 Bulletin 2005/10**

(51) Int Cl.⁷: **H05B 41/282**, H05B 41/288

(21) Application number: **99115030.1**

(22) Date of filing: **03.08.1999**

(54) **Switching power supply, particularly for high-pressure lamps and neon tubes**

Elektronisches Vorschaltgerät , insbesondere für Hochdruck-Lampen und Neon-Röhren

Ballast électronique en particulier pour lampes à haute pression et tubes au néon

(84) Designated Contracting States:
**AT BE CH CY DE DK ES FI FR GB GR IE IT LI LU MC NL PT SE**

(30) Priority: **07.08.1998 IT TV980114**

(43) Date of publication of application:
**09.02.2000 Bulletin 2000/06**

(73) Proprietors:
• **Dalla Zanna, Gianluca**
  **35011 Campodarsego (Padova) (IT)**
• **Dalla Zanna, Giovanni**
  **35011 Campodarsego (Padova) (IT)**

(72) Inventor: **Corticelli, Giuliano**
**35100 Padova (IT)**

(74) Representative: **Modiano, Guido, Dr.-Ing. et al**
**Dr. Modiano & Associati SpA**
**Via Meravigli, 16**
**20123 Milano (IT)**

(56) References cited:
**EP-A- 0 338 109**      **EP-A- 0 765 108**
**GB-A- 2 074 801**      **US-A- 5 589 742**
**US-A- 5 726 537**

**Description**

The present invention relates to a switching power supply, particularly for high-pressure lamps and neon tubes, which allows to adjust the power level and therefore the luminous intensity of the emission of the lamps.

The issue to be considered relates to the starting and power supply of luminaires (optionally generating ultraviolet light) known as arc lamps, which include neon tubes, commonly used for home and industrial lighting, and (less frequently) also for generating ultraviolet radiation, and of high-pressure lamps, used where high luminous intensities are required, with supply power levels of 400 W and above.

These lamps, because of their voltamperometric characteristic, cannot be connected directly to the power supply line (220 VAC or 380 VAC); while they are off they in fact behave practically like an open circuit, and even if they were directly connected to the power supply line (at least for tubes from 20 W upward) they would remain off; starting them in fact requires a pulse across them which has a brief duration (a few microseconds) but a high voltage whose value is 500-1000 V for neon tubes and even 5000-8000 V for high-pressure lamps; once the arc, which is the element that generates the emission (visible or otherwise) has been started, said lamps tend to keep the instantaneous voltage across them constant; accordingly, it is again impossible to supply them directly from the line.

The solution adopted most commonly at present uses auxiliary components, commonly known as ballasts, which are arranged in series to the lamps and allow to supply them from the mains once they have been started; the ballasts alone, however, do not start the arc lamps, since other devices, such as starters for neon tubes and high-voltage starters for high-pressure lamps, are necessary for this purpose.

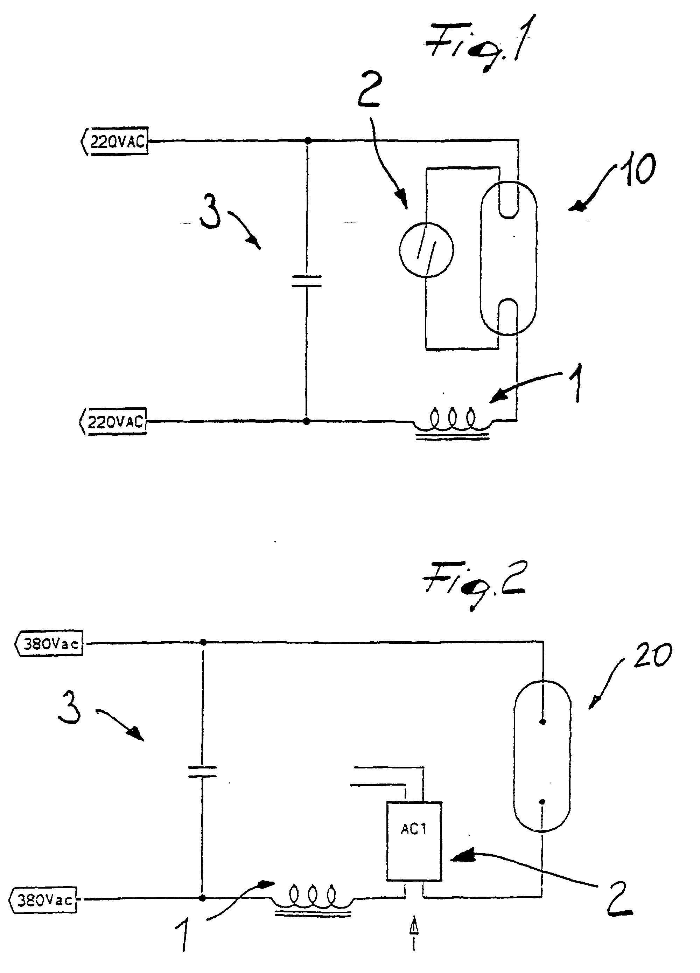

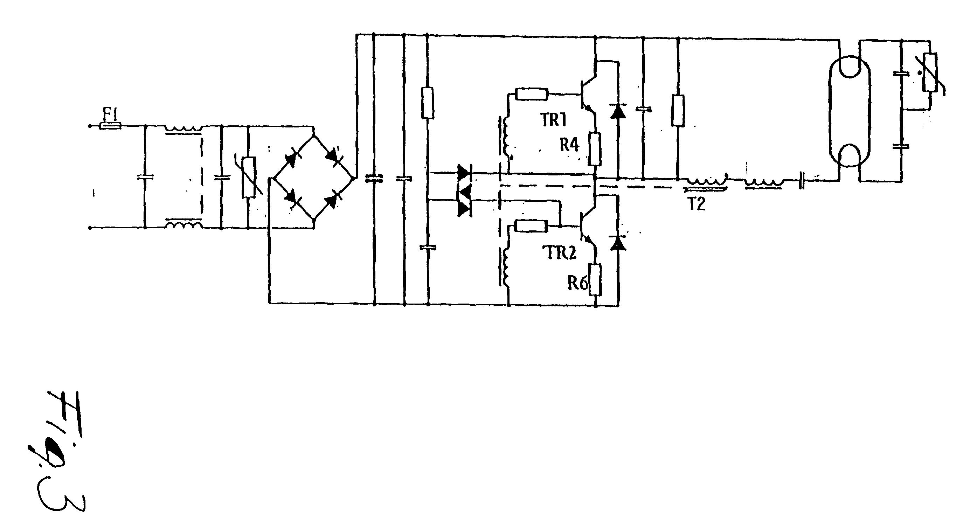

Figures 1 and 2 illustrate two conventional circuits, wherein the reference numerals 1 designate the ballasts, while the numerals 2 designate the starter for the neon tube, and for the high-voltage starter for the high-pressure lamp. The diagrams are completed by power factor correction capacitors, designated by the reference numerals 3 which are indispensable for high power levels.

However, this combination of devices (ballast plus starter for neon tubes or ballast plus high-voltage starter for high-pressure lamps) is bulky, heavy (especially for considerable power levels, i.e., for high-pressure lamps), does not allow power level adjustment (except by replacing the ballast or at least using another tap, in the case of multiple-tap ballasts), does not keep the power level at the lamp constant when the line voltage varies (this being a much more noticeable effect for higher-voltage tubes) and finally it absorbs from the line a very high level of reactive power which also requires power factor correction capacitors for high power levels.

Finally, the starter of neon tubes is a device which undergoes a certain ageing and once it is defective it prevents the lamp from starting.

Another solution which has now become relatively common, but only for neon tubes, uses electronic circuits commonly known as electronic ballasts, which were initially marketed 15-20 years ago thanks to the better availability of electronic power components known as high-voltage BJTs and MOSFETs; these circuits attempted to eliminate both the ballast and the starter, but only for neon tubes.

Further, these devices typically handle low power levels (50-200 W) and drive one or two tubes; finally, they do not allow luminosity adjustment.

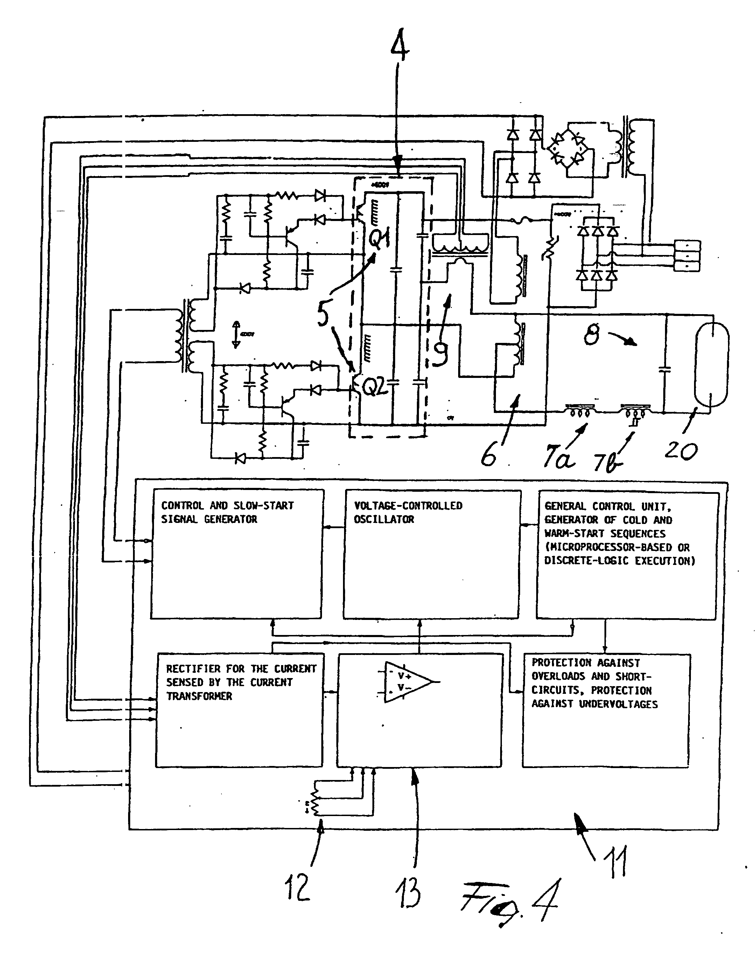

Figure 3 illustrates a known and established diagram of said electronic ballasts, taken from a Texas Instruments application manual which explains the operating principle of said circuit and the manner in which it is able to start a neon tube by virtue of a suitably arranged inductor together with other accessory components such as capacitors and PTCs.

The circuit shown in Figure 3 in any case supplies a single neon tube, handles a very low power level and has no adjustment; moreover, it is a self-oscillating circuit, i.e., it generates a square wave by means of which it drives the neon tube, returning part of the collector current of the BJTs to the bases.

Said circuits are currently not competitive with respect to ballasts in terms of cost.

As regards high-pressure lamps, instead, no device is currently known which eliminates the combination of a ballast and a starter (plus a power factor correction capacitor) or keeps the power level at the lamp constant despite varying the line voltage or allows easy power level adjustment. In this regard, it is noted that at the power levels that come into play with the lamps the dissipation of the ballasts becomes anything but negligible, often requiring ventilation systems inside the apparatus that accommodates the tube and the ballast.

Instead, it is known that EP-A-0 765 108 discloses a high intensity discharge lamp lighting device substantially comprising the features recited in the preamble of claim 1.

The aim of the present invention is to solve the above noted problems, eliminating the drawbacks of the cited prior art, and therefore to provide a switching power supply which allows to start, supply and adjust arc discharge tubes such as the ones described, at the same time having compact dimensions, limited weight, high efficiency and reliability, and a limited injection of reactive power on the line without using power factor correction capacitors.

Within the scope of this aim, an important object is to provide a switching power supply which is circuitally rather simple and has low manufacturing costs.

This aim, this object and others which will become apparent hereinafter are achieved by a switching power supply, particularly for high-pressure lamps and neon tubes as claimed in claim 1.

Advantageously, said inductors and said capacitor are adapted to start the neon tubes by means of an adapted control logic unit which drives the semiconductors of the power stage with adequate signals, according to a very specific sequence adapted to achieve starting while the tube is off and is then adapted to maintain the power level constant when the tube is on.

Further characteristics and advantages of the invention will become apparent from the following detailed description of a particular but not exclusive embodiment, illustrated only by way of non-limitative example in the accompanying drawings, wherein:

Figures 1 and 2 illustrate the two commonly used diagrams for starting and supplying high-pressure lamps and neon tubes;

Figure 3 is a conventional circuit diagram of an electronic ballast;

Figure 4 illustrates a block diagram of the power supply according to the invention;

Figure 5 is a conceptual diagram which allows to obtain the starting voltage, particularly optimized for high-pressure lamps;

Figure 6 is a view of the connection of the power supply of the invention to a possible cluster of neon tubes;

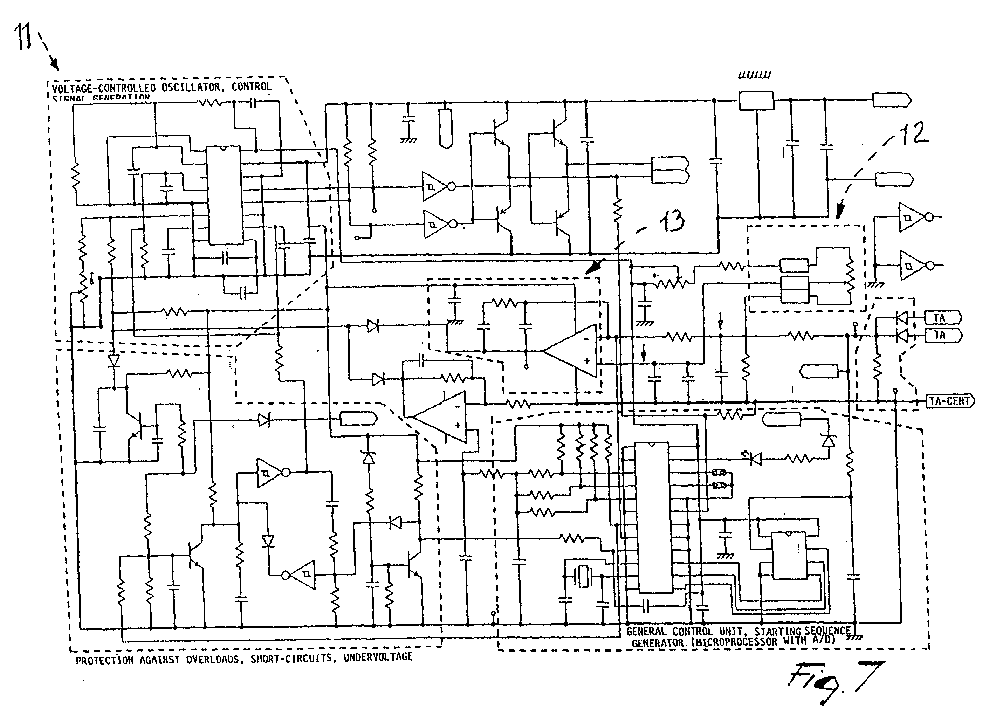

Figure 7 is a circuit diagram of a possible embodiment of the control logic unit of the power supply according to the invention.

With reference to the above cited figures, and particularly to Figure 4, the reference numeral 4 designates a power stage, which is preferably but not exclusively a circuit known as a half-bridge, in which semiconductors known as IGBTs have been used; these choices are made for the sake of simplicity and low cost and in view of the voltages involved, but they are non-limitative.

Other equivalent solutions, such as for example the full bridge, the flyback configuration, the forward configuration and the push-pull configuration, may be used as an alternative.

The half-bridge is equivalent to a square-wave voltage generator whose value is much higher than the arc-discharge voltage of a high-pressure lamp 20.

The half-bridge, constituted by the electronic switches generally designated by the reference numeral 5 and individually by the reference signs Q1 and Q2, supplies the high-pressure lamp 20 by means of a transformer or autotransformer, designated by the reference numeral 6, by means of two inductors, designated by the reference numerals 7a, 7b, and with the presence of a capacitor, designated by the reference numeral 8.

The current that flows through the inductors 7a and 7b (and therefore through the high-pressure lamp 20, once it has been started, and assuming the capacitor 8 to be negligible in this situation) flows through a current transformer, designated by the reference numeral 9, which returns a suitably reduced copy of said current to a control logic unit, designated by the reference numeral 11.

The inductor 7a is the inductor which in practice allows to couple the output of the half-bridge to the lamp 20: it causes the current that supplies the lamp to be approximately triangular, and it can be easily checked that the peak-to-peak amplitude of said current and therefore its value vary as a function of the frequency of the square wave generated by the half-bridge and as a function of the value of inductor 7a.

Therefore, by varying the driving frequency of the electronic switches Q1 and Q2 of the half-bridge by means of the control logic unit 11, it is possible to control the effective current that flows through the high-pressure lamp 20, thus adjusting its luminosity. The control logic unit 11 also senses the current that flows through the high-pressure lamp 20 by means of the current transformer 9 and is capable of changing the driving frequency of the half-bridge in order to keep said current constant, for example when the line voltage varies.

Accordingly, by means of a simple potentiometer, designated by the reference numeral 12, it is possible to set the current that must flow across the lamp, thus adjusting the power level, and an appropriate feedback circuit 13 ensures that the current in the lamp, sensed by means of the current transformer 9, then remains equal to the set value regardless of the reason that tends to vary it.

One method for adjusting the power level delivered by a switching transformer by means of the frequency can also be achieved by means of conventional power supplies, for example of the type known as resonant half-bridges with series or parallel load or as quasi-resonant converters, which however are not used in the field of lighting, in which, it is noted once more, there are no switching power supplies adapted to drive high-pressure lamps.

Due to reasons related to efficiency of the half-bridge, simplicity of the IGBT driving circuits and containment of the noise generated by the power supply, the switching frequency when the lamp 20 is on varies preferably between 35 kHz and 20 kHz.

Accordingly, the inductor 7a is studied and sized so as to supply the correct current to the lamp, starting from the peak-to-peak voltage generated by the power bridge 4 and from the voltage that occurs across the lamp when it is started.

The value of the inductor depends on the value of the square-wave voltage across it, on the working frequency and on the effective current to be applied to the lamp.

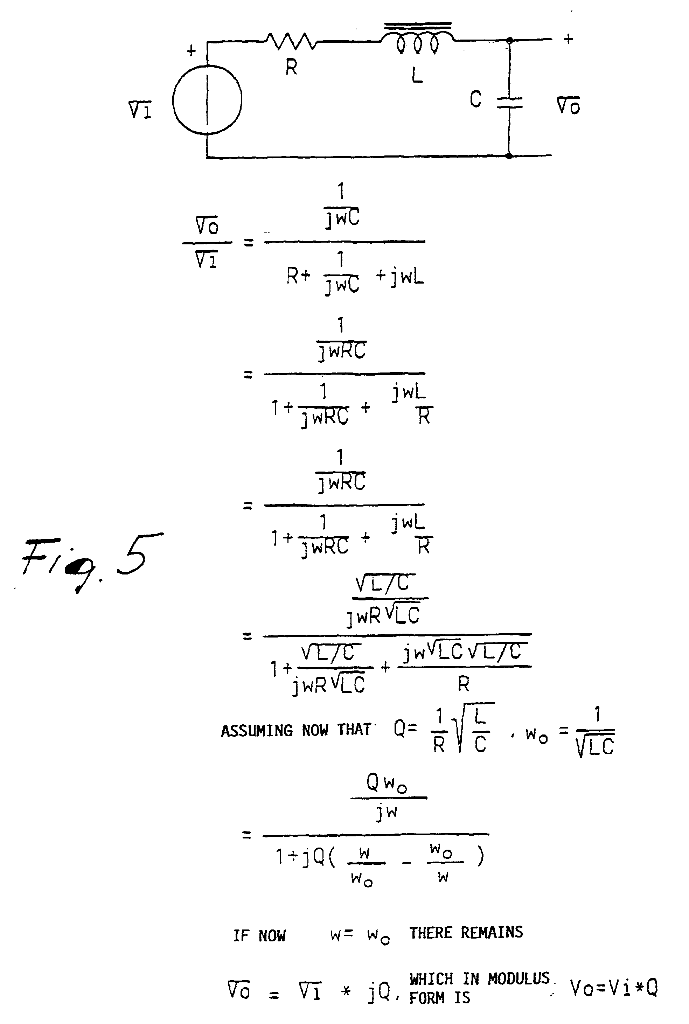

Figure 5 is a view of the conceptual diagram by virtue of which it is possible to obtain the starting voltage, particularly optimized for high-pressure lamps 20 (which require 5000-8000 V), starting from a significantly lower AC voltage, utilizing the resonance of a series RLC circuit.

The requirements described hereafter are necessary for high-pressure lamps, whose starting indeed requires much higher voltages than subsequently required after starting; for neon tubes, the saturable inductor 7b about to be described is not necessary and is not present in the power supply diagram of neon tubes.

This conceptual diagram partially resembles the one used in the cited Texas Instruments circuit, which however cannot be used in the present field of application.

The analysis presented here is instead rigorous and the cited equations can be easily interpreted and demonstrate that by applying to a series RLC cell a sinusoidal curve whose frequency is equal to the resonance frequency it is possible to obtain on the capacitor a voltage $\bar{V}O$ which is Q times higher than the input voltage $\bar{V}i$, where $Q = 1/R*sqrt(L/C)$, thus allowing to rather easily reach values on the order of 100 times.

The inductor L must therefore be arranged in series to the lamp, but it is noted immediately that it is not sufficient to use the same inductor that adapts the half-bridge to the high-pressure lamp, since the adaptation L and the starting L must have significantly different values; for neon tubes, instead, the two values of L can be very close and it is possible to use a single component; in any case the present description remains valid.

The capacitor C (capacitor 8) is an adapted capacitor which in practice is connected in parallel to the lamp; the resistor R includes all the dissipative components of the capacitor and especially of the inductor and output transformer.

Therefore, by driving the power bridges at the resonance frequency it is possible to try to exploit the described phenomenon in order to start the switched-off lamp.

However, the capacitor C cannot be too high, since as mentioned it is in parallel to the lamp and when said lamp is on its effect must be negligible so as to avoid burdening the power bridge with an unnecessary additional load, albeit a reactive one, which would worsen the efficiency and quality of the adjustment.

Furthermore, an increase in C reduces the value of Q; L, too, cannot be too high in the case of high-pressure lamps, since the choice of its value depends on the above presented observations regarding its role in determining the current in the lamp; an excessively high value thereof would force an excessively low operating frequency when the lamp is on would force one to design transformer 6 with a less favorable turns ratio for the size of Q1 and Q2.

Accordingly, the values of C and L must in practice be constrained by the rest of the design and would produce (for high-pressure lamps) a resonance frequency of approximately 300 kHz; such a frequency is unattainable for a switching power supply structured for 20-40 kHz, since IGBTs are unsuitable for such frequencies (which are attained by MOSFETs, which however entail other significant penalizations in terms of circuitry), and it is necessary to fully redesign both the drivers (which can no longer be simple and cheap, since they must handle 10 times higher power levels) and the control logic unit.

The solution adopted for high-pressure lamps, which is also claimed, is to arrange in series to inductor 7a, which is a coupling inductor between the square-wave output of the power half-bridge 4 and the lamp, a second inductor 7b which has a higher value (3-5 times higher) but is saturable; in this manner, while the lamp is off and the current flowing through it is nil, inductor 7b appears to be in series to inductor 7a and reduces by a factor of 2-2.5 the resonance frequency of inductors 7a, 7b and capacitor 8, bringing it to approximately 150 kHz; moreover, this increases the figure of merit of the circuit, raising the voltage available on capacitor 8 at resonance.

When the lamp is on, the current flowing across inductors 7a and 7b is such as to saturate inductor 7b for most of each operating half-period, accordingly leaving substantially only inductor 7a (much smaller than inductor 7b) responsible for the shape and amplitude of the current in the lamp.

The distortion on the waveform of the current and the dissipation on inductor 7b due to saturation are essentially irrelevant.

However, it is still not easy to drive the IGBTs of the power bridge 4 at 150 kHz, when the operating frequency is in actual fact five times lower, since this would require complex drivers which are to be avoided; the solution adopted, which is also claimed, is to bring the operating frequency of the bridge to approximately 50-60 kHz, accordingly utilizing the third hamonic of the output square wave to apply the new (reduced) resonance frequency to the circuit formed by components 7a, 7b and 8.

This solution is feasible because it is possible to express a periodic value as the sum of sinusoids and cosinusoids whose frequency is equal to the frequency of the value being considered and of all their infinite harmonics whose frequency is a multiple of suitable amplitude; in particular a square wave, such as the one generated by the power bridge, can be resolved into a fundamental wave of suitable amplitude plus the third harmonic, equal to 1/3 of the fundamental wave, plus all the other odd harmonics with decreasing amplitudes; accordingly, if the power half-bridge is generating a square wave with an amplitude of 100 V peak, it can be resolved into a fundamental sinusoid which has an amplitude of 127 V peak plus the third harmonic whose amplitude is 42 V peak, plus a fifth harmonic with an amplitude of 25 V peak, and so forth.

Accordingly, if the control logic unit 11, when the lamp 20 is off, drives the power half-bridge 4 at 50-60 kHz, the third harmonic coincides with the resonance frequency of components 7a, 7b and 8, and if the Q of said circuits is high enough, it is possible to obtain on capacitor 8 the 8000 V required to start a high-pressure lamp.

It should also be noted that the Texas Instruments electronic ballast actually employs this mechanism, since it too sees a resonant load when the lamp is off; however, it is given a distinct advantage by the very high value of inductor 7a of Figure 3 (15-20 times, since the load is a neon tube which requires much smaller currents) with respect to the requirements of the high-pressure lamp, and this allows resonance around 40-50 kHz; further, in view of the lower voltage required to start neon tubes (500-1000 V), the same self-oscillation frequency when the lamp 20 is on (or a slightly higher one, as occurs due to the higher current that affects TR1, TR2, R4, R6 and T2 during starting) allow to achieve the starting voltage.

However, the circuit formed by inductors 7a, 7b and capacitor 8 has significant tolerances on the values of its components: capacitor 8 can be found with a tolerance of 10% (or 5% if need be); components 7a-7b cannot be expected to have tolerances of less than 10-15%; ultimately, the resonance frequency of the above circuit can vary at least by the same order of magnitude and one cannot be certain, by applying a frequency of approximately 50-60 kHz to the power half-bridge, of exciting the resonance frequency of the three components.

An important solution of the invention, whose originality is claimed, comes into play: namely, the fact that when the lamp is off the operating frequency of the half-bridge sweeps the entire possible range on the basis of the above noted tolerance in order to obtain the resonance of 7a, 7b and 8; accordingly, the control logic unit drives the power half-bridge with a frequency which, in a few tenths of a second, passes for example from 60 kHz to 20 kHz a few times until starting is achieved.

It is self-evident that once the arc has been started the control logic unit 11 must change operating mode, accordingly changing from sweeping between 60 and 20 kHz in order to find the resonance of 7a, 7b and 8 to the adjustment of the current that flows across the lamp 20, accordingly modifying the frequency this time in order to keep the current constant.

A further claim of the present invention arises from the above: namely, that the control logic unit must be able to discriminate between the lamp-off condition and the lamp-on condition, starting the search for the resonance of 7a, 7b and 8 in the first case until lamp starting is achieved and controlling, in the second case, the operating frequency in order to keep constant the effective current in said lamp.

This aim has been achieved in two manners: one uses an electronic circuit with standard logic gates such as the known CD40106 and linear integrated circuits such as LM393 and LM358; a second more refined method is to assign the management of the entire lamp starting and adjustment process to a microprocessor provided with appropriate software which, as mentioned, senses whether the lamp is on or off, drives the power bridge at a variable frequency until the lamp is off, and begins to adjust the frequency as described when the lamp is on.

Such a solution has the advantage of being able to manage more complex situations, such as for example the restarting of the lamp when warm (after a power outage, for example), which requires higher voltages and may not be immediate; it can also manage the multiple driving of multiple lamps, a performance of which the invention is capable and whose originality is also claimed; it can allow remote control by means of a computer if there is a system of several lamps to be driven simultaneously (for example in the field of public or industrial lighting); it can allow lighting sequences at different power levels for different times (for example for sun baths); it can allow programmed starting with particular events (for example dusk lighting).

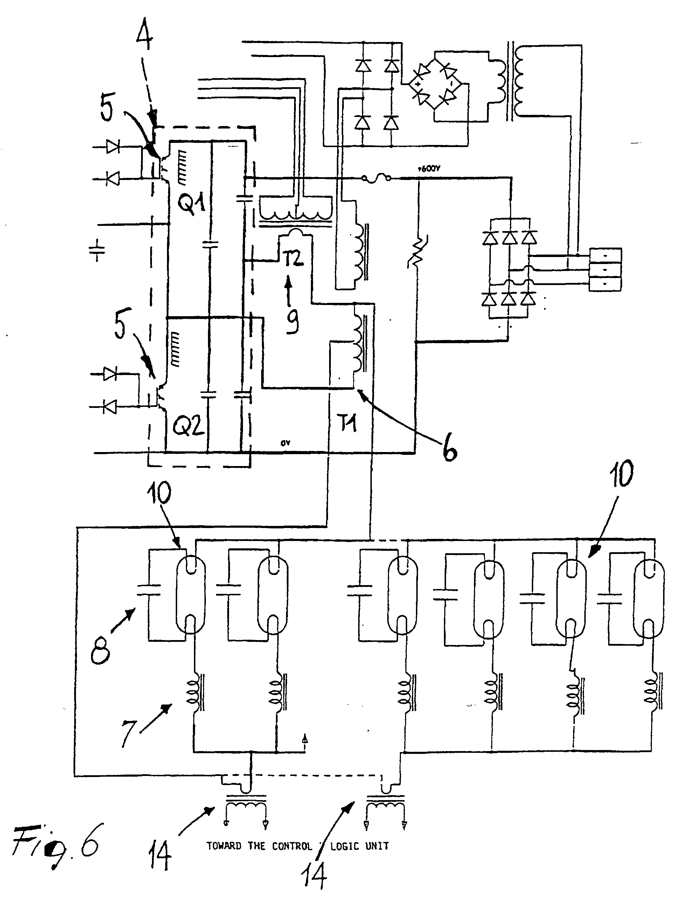

Finally, it is noted again that the structure of the output network (7a, 7b and 8) is necessary only for driving high-pressure lamps, which require very high starting voltages (5000-8000 V); for neon tubes, the structure shown in Figure 6 is amply sufficient, although the "resonance seeking" mechanism described earlier and the subsequent "frequency adjustment" mechanism for power control remain valid; in order to handle abnormal situations (for example the switching off of one tube in a cluster of 50 tubes), the logic unit 11 can individually sense the current of each tube or of cluster of tubes (for example 5 clusters of tubes 10) in order to save components or simplify wiring.

Such a solution is exemplified in Figure 6, where the reference numeral 14 designates the current transformers that provide the above described situation.

These possible variations of the proposed circuits are also to be considered as being claimed.

The use of a current transformer crossed by multiple pairs of power supply cables of individual neon lamps in opposite directions, so as to detect the switching-off of one of the neon tubes, is to be considered as an evaluated concept and an object of the present description.

Finally, it is noted that the power supply according to the invention has been conceived for connection to a three-phase power supply line at 220-400 V (with an optional filter interposed); its connection to a single-phase line (domestic 220 V, for example) is equally possible by adding a few additional components such as capacitors and circuits for reducing the starting current as prescribed by European standards, or by means of circuits for correcting the current absorbed by the line known as PFCs, as already prescribed by said standards for certain fields and power levels and as will be prescribed in increasingly broader fields in the future.

These variations of the invention also must be considered as an object of the present application, since they again provide, as a whole, a switching power supply for high-pressure lamps and neon tubes with power adjustment which is capable of starting said lamps without using starters.

The described power supply is different and more complicated in terms of circuitry than the neon-tube ballast of Figure 3, since the latter is substantially a self-oscillating circuit, because there is distinctly different arc lamp power supply circuitry, and most of all because the power supply according to the present invention includes a control circuit which is suitable to manage lamp starting and adjustment, which is entirely absent in the Texas Instruments circuit, but is not capable of driving high power levels, much less managing high-pressure lamps.

It has thus been observed that the invention has achieved the intended aim a and objects, a power supply having been devised which allows starting, power supply and adjustment of neon tubes or high-pressure lamps while having compact dimensions, a modest weight, high efficiency and reliability, and limited injection of reactive power on the line without using power factor correction capacitors, said power supply being at the same time circuitally rather simple and having low manufacturing costs.

The device is of course susceptible of numerous modifications and variations, all of which are within the scope of the same inventive concept.

The materials and the dimensions that constitute the individual components of the device may of course also be the most pertinent according to specific requirements.

The disclosures in Italian Patent Application No. TV98A000114 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1.  A switching power supply, particularly for high-pressure lamps and neon tubes, comprising a rectifier which is directly connected to the mains, adapted to produce a DC voltage to drive a semiconductor power stage (4) which generates a variable-frequency square wave, said square wave being adapted to drive at least one lamp (20) by means of at least one inductor (7a) for each lamp (20), with a capacitor (8) arranged in parallel to said lamp (20), further comprising a control logic unit (11) which is suitable to discriminate between on and off states of said lamp (20) and to generate starting in the case of off lamps or to control the current in the lamps when they are on, **characterized in that** said control unit (11) is capable to seek the resonance of said at least one inductor (7a) and said capacitor (8) by sweeping the entire possible range of frequencies on the basis of the tolerances of the said at least one inductor (7a) and said capacitor (8), from the lamp-off condition until said lamp (20) is started, and it is capable to control the operating frequency of said power stage (4) in order to keep constant the effective current in said lamp (20) after said lamp 20 has been started.

2.  The power supply according to claim 1, **characterized in that** said at least one inductor (7a) and said capacitor (8) are adapted to trigger said lamp (20) by means of said control logic unit (11) which drives semiconductors of said power stage (4), according to a specific sequence adapted to achieve starting while said lamp (20) is off and is then adapted to keep the power constant when said lamp (20) is on.

3.  The power supply according to claim 1, **characterized in that** it comprises a filter interposed between said mains and said rectifier, said rectifier generating a substantially continuous voltage by means of which it supplies the semiconductor power stage (4), said power stage (4) supplying a transformer or autotransformer(6) in order to adapt the voltage generated by it to an arc discharge voltage of said lamp, a secondary winding of said transformer (6) reaching said lamp (20) across capacitors and inductors adapted to achieve starting by means of the control logic unit (11).

4.  The power supply according to claim 1, **characterized in that** power adjustment is achieved by adjusting the operating frequency of said power stage by means of a first inductor (7a) which adapts the square wave generated by said power stage (4) to said lamp (20).

5.  The power supply according to claim 1, **characterized in that** the current that flows across said lamp is sensed by a current transformer (9) which provides said control logic unit (11 ) with a copy of the value of said current, which when compared to an adapted current reference allows it to adjust the operating frequency of said power stage (4) in order to keep said current constant.

6.  The power supply according to claims 1, 3 and 5, **characterized in that** said current that flows across said lamp (20) is adjustable by changing the current reference with which the current applied by said current transformer (9) is compared.

7.  The power supply according to claim 6, **characterized in that** it provides the starting of said lamps, particularly for high-pressure lamps, by means of the resonance of the circuit in output to said power stage (4), said resonance being obtained at a frequency which can be reached by said power stage (4), for said high-pressure lamps, by virtue of the presence, in the output circuit, of said capacitor (8) and of an additional saturable inductor (7b) which, when the lamp (20) is on, tends to drop to zero, leaving only the first inductor (7a) with the task of adapting said stage (4) to said lamp in order to shape the current and be able to adjust it, changing the operating frequency.

8. The power supply according to claim 7, **characterized in that** it applies said resonance of said circuit in output to said power stage (4), making said power stage (4) run, when the lamp (20) is off, at a variable frequency, utilizing the third harmonic of the generated voltage in order to contain the value of said saturable inductor (7b) and of the capacitor (8) in parallel to said lamp (20), and the maximum value of the operating frequency of said power stage (4).

9. The power supply according to claims 1 and 8, **characterized in that** said power stage (4) comprises semiconductors such as MOSFETs or MCTs or SCRs or ASCRs or GTOs.

10. The power supply according to one or more of the preceding claims, **characterized in that** said control logic unit (11) is capable to drive said power stage (4) with a frequency which passes in a few tenths of a second from 60 kHz to 20 kHz a few times until starting is achieved, said control logic unit (11) changing operating mode once the arc has been started and changing from sweeping the 60-20 kHz interval in search of the resonance of said inductors (7) and capacitor (8) to adjusting the current that flows across said lamp (20), modifying said frequency in order to keep said current constant.

11. The power supply according to one or more of the preceding claims, **characterized in that** the management of the entire starting and adjustment process of said lamp (20) is carried out by a microprocessor which senses whether said lamp (20) is on or off, drives said power stage (4) at a variable frequency until said lamp (20) is off and begins frequency adjustment when the lamp (20) is on.

12. The power supply according to one or more of the preceding claims, **characterized in that** it is capable of simultaneously driving multiple high-pressure lamps or multiple neon tubes (10) by using individual inductors (7) for each one of said neon tubes.

**Patentansprüche**

1. Schaltstromversorgung, insbesondere für Hochdrucklampen und Neonröhren, die einen Gleichrichter umfasst, der direkt mit dem Stromnetz verbunden und so eingerichtet ist, dass er eine Gleichspannung zum Ansteuern einer Halbleiter-Leistungsstufe (4) produziert, die einen Rechteckimpuls veränderlicher Frequenz erzeugt, wobei der Rechteckimpuls so eingerichtet ist, dass er wenigstens eine Lampe (20) mittels wenigstens eines Induktors (7a) für jede Lampe (20) ansteuert, wobei ein Kondensator (8) parallel zu der Lampe (20) angeordnet ist, und die des Weiteren eine Steuerlogik-Einheit (11) umfasst, die sich dazu eignet, zwischen An- und Aus-Zuständen der Lampe (20) zu unterscheiden und bei im Aus-Zustand befindlichen Lampen Zündungen erzeugt oder den Strom in den Lampen steuert, wenn sie sich im An-Zustand befinden,
**dadurch gekennzeichnet,**
**dass** die Steuereinheit (11) in der Lage ist, die Resonanz des wenigstens einen Induktors (7a) und des Kondensators (8) durch Überstreichen des gesamten möglicher Bereiches der Frequenzen auf Basis der Toleranzen des wenigstens einen Induktors (7a) und des Kondensators (8) von dem Aus-Zustand der Lampe bis zum Zünden der Lampe (20) zu suchen, und in der Lage ist, die Arbeitsfrequenz der Leistungsstufe (4) zu steuern, um den effektiven Strom in der Lampe (20) konstant zu halten, nachdem die Lampe (20) gezündet worden ist.

2. Stromversorgung nach Anspruch 1,
**dadurch gekennzeichnet,**
**dass** der wenigstens eine Induktor (7a) und der Kondensator (8) so eingerichtet sind, dass sie die Lampe (20) mittels der Steuerlogik (11), die Halbleiter der Leistungsstufe (4) ansteuert, entsprechend einer spezifischen Sequenz auslösen, die so eingerichtet ist, dass Zünden ausgeführt wird, wenn die Lampe (20) abgeschaltet ist, und so eingerichtet ist, dass dann die Stromversorgung konstant gehalten wird, wenn die Lampe (20) angeschaltet ist.

3. Stromversorgung nach Anspruch 1,
**dadurch gekennzeichnet,**
**dass** sie ein Filter umfasst, das zwischen dem Stromnetz und dem Gleichrichter angeordnet ist, wobei der Gleichrichter eine im wesentlichen kontinuierliche Spannung erzeugt, mit der er die Halbleiter-Leistungsstufe (4) speist, und die Leistungsstufe (4) einen Transformator oder Autotransformator (6) speist, um die dadurch erzeugte Spannung an eine Lichtbogenentladungsspannung der Lampe anzupassen, wobei eine Sekundärwicklung des Transformators (6) über Kondensatoren und Induktoren zu der Lampe (20) führt, um Zünden mittels der Steuerlogik-Einheit auszuführen.

**4.** Stromversorgung nach Anspruch 1, **dadurch gekennzeichnet,** **dass** Stromregulierung erreicht wird, indem die Arbeitsfrequenz der Leistungsstufe mittels eines ersten Induktors (7a) reguliert wird, der den durch die Leistungsstufe erzeugten Rechteckimpuls an die Lampe (20) anpasst.

**5.** Stromversorgung nach Anspruch 1, **dadurch gekennzeichnet,** **dass** der Strom, der über die Lampe fließt, von einem Stromtransformator (9) erfasst wird, der der Steuerlogik-Einheit (11) eine Kopie des Wertes des Stroms bereitstellt, der, wenn er mit einem angepassten Strom-Bezugswert verglichen wird, es ermöglicht, die Arbeitsfrequenz der Leistungsstufe (4) zu regulieren, um den Strom konstant zu halten.

**6.** Stromversorgung nach den Ansprüchen 1, 3 und 5, **dadurch gekennzeichnet,** **dass** der Strom, der über die Lampe (20) fließt, reguliert werden kann, indem der Strom-Bezugswert geändert wird, mit dem der durch den Stromtransformator (9) angelegte Strom verglichen wird.

**7.** Stromversorgung nach Anspruch 6, **dadurch gekennzeichnet,** **dass** sie das Zünden der Lampen, insbesondere bei Hochdrucklampen. mittels der Resonanz des Kreises am Ausgang zu der Leistungsstufe (4) bewirkt, wobei die Resonanz bei einer Frequenz erzielt wird, die durch die Leistungsstufe (4) für die Hochdrucklampen aufgrund des Vorhandenseins des Kondensators (8) und eines zusätzlichen sättigungsfähigen Induktors (7b) erreicht werden kann, der, wenn die Lampe (20) angeschaltet ist, dazu tendiert, auf Null zu fallen, so dass nur dem ersten Induktor (7a) die Aufgabe zukommt, die Stufe (4) an die Lampe anzupassen, um den Strom zu formen und durch Änderung der Arbeitsfrequenz regulieren zu können.

**8.** Stromversorgung nach Anspruch 7, **dadurch gekennzeichnet,** **dass** sie die Resonanz des Kreises am Ausgang an die Leistungsstufe (4) anlegt, so dass die Leistungsstufe (4), wenn die Lampe (20) abgeschaltet ist, bei einer veränderlichen Frequenz läuft, und zwar unter Verwendung der dritten Harmonischen der erzeugten Spannung, um den Wert des sättigungsfähigen Induktors (7b) und des Kondensators (8) parallel zu der Lampe (20) zu halten, sowie des maximalen Wertes der Arbeitsfrequenz der Leistungsstufe (4).

**9.** Stromversorgung nach den Ansprüchen 1 und 8,

**dadurch gekennzeichnet,** **dass** die Leistungsstufe (4) Halbleiter, wie beispielsweise MOSFET oder MCT oder SCR oder ASCR oder GTO, umfasst.

**10.** Stromversorgung nach einem oder mehreren der vorhergehenden Ansprüche, **dadurch gekennzeichnet,** **dass** die Steuerlogik-Einheit (11) in der Lage ist, die Leistungsstufe (4) mit einer Frequenz anzusteuern, die einige Male in wenigen Zehntelsekunden von 60 kHz zu 20 kHz übergeht, bis Zünden ausgeführt ist, wobei der Steuerlogik-Einheit (11) die Betriebsart ändert, wenn der Lichtbogen gezündet worden ist, und vom Überstreichen des Intervalls 60 - 20 kHz beim Suchen der Resonanz der Induktoren (7) und des Kondensators (8) dazu übergeht, den Strom, der über die Lampe (20) fließt, zu regulieren, wobei die Frequenz modifiziert wird, um den Strom konstant zu halten.

**11.** Stromversorgung nach einem oder mehreren der vorangehenden Ansprüche, **dadurch gekennzeichnet,** **dass** die Abwicklung des gesamten Zünd- und Regulierprozesses der Lampe (20) von einem Mikroprozessor ausgeführt wird, der erfasst, ob die Lampe (20) anoder ausgeschaltet ist, die Leistungsstufe (4) mit einer variablen Frequenz ansteuert, solange die Lampe (20) ausgeschaltet ist und mit der Frequenzregulierung beginnt, wenn die Lampe (20) angeschaltet ist.

**12.** Stromversorgung nach einem oder mehreren der vorangehenden Ansprüche, **dadurch gekennzeichnet,** **dass** sie in der Lage ist, gleichzeitig mehrere Hochdrucklampen oder mehrere Neonröhren (10) unter Verwendung einzelner Induktoren (7) für jede der Neonröhren anzusteuern.

**Revendications**

**1.** Alimentation à découpage, particulièrement pour des lampes à haute pression et des tubes au néon, comprenant un redresseur qui est connecté directement au secteur, apte à produire une tension de courant continu pour attaquer un étage de puissance à semi-conducteurs (4) qui engendre une onde carrée à fréquence variable, ladite onde carrée étant apte à attaquer au moins une lampe (20) au moyen d'au moins une bobine d'inductance (7a) pour chaque lampe (20), un condensateur (8) étant agencé en parallèle à ladite lampe (20), comprenant en outre un module de logique de commande (11) qui est approprié pour effectuer une discrimination entre des états allumé (ON) et éteint (OFF) de ladite lampe (20) et pour produire un amorçage dans le cas de lampes éteintes ou pour commander le courant dans les lampes . lorsqu'elles sont allumées, **caractérisée en ce que** ledit module de commande (11) peut rechercher la résonance de ladite au moins une bobine d'inductance (7a) et dudit condensateur (8) par balayage de toute la gamme possible de fréquences sur la base des tolérances de ladite au moins une bobine d'inductance (7a) et dudit condensateur (8), de l'état éteint de lampe jusqu'à l'amorçage de ladite lampe (20), et peut commander la fréquence de fonctionnement dudit étage de puissance (4) pour maintenir constant le courant efficace dans ladite lampe (20) après amorçage de celle-ci.

2. Alimentation selon la revendication 1, **caractérisée en ce que** ladite au moins une bobine d'inductance (7a) et ledit condensateur (8) sont aptes à déclencher ladite lampe (20) au moyen dudit module de logique de commande (11) qui attaque des semiconducteurs dudit étage de puissance (4), en fonction d'une séquence spécifique propre à obtenir un amorçage tandis que ladite lampe (20) est éteinte et qui est ensuite propre à maintenir constante la puissance lorsque ladite lampe (20) est allumée.

3. Alimentation selon la revendication 1, **caractérisée en ce qu'**elle comprend un filtre interposé entre ledit secteur et ledit redresseur, ledit redresseur engendrant une tension sensiblement continue au moyen de laquelle il alimente l'étage de puissance à semi-conducteurs (4), ledit étage de puissance (4) alimentant un transformateur ou un autotransformateur (6) dans le but d'adapter la tension engendrée par celui-ci à une tension de décharge d'arc de ladite lampe, un enroulement secondaire dudit transformateur (6) atteignant ladite lampe (20) en passant par des condensateurs et des bobines d'inductance propres à obtenir un amorçage au moyen du module de logique de commande (11).

4. Alimentation selon la revendication 1, **caractérisée en ce qu'**un réglage de puissance est obtenu par réglage de la fréquence de fonctionnement dudit étage de puissance au moyen d'une première bobine d'inductance (7a) qui adapte l'onde carrée engendrée par ledit étage de puissance (4) à ladite lampe (20).

5. Alimentation selon la revendication 1, **caractérisée en ce que** le courant qui passe dans ladite lampe est détecté par un transformateur de courant (9) qui donne audit module de logique de commande (11) une copie de la valeur dudit courant, qui, lorsqu'on le compare à une référence de courant adapté, lui permet de régler la fréquence de fonctionnement dudit étage de puissance (4) pour maintenir constant ledit courant.

6. Alimentation selon les revendications 1, 3 et 5, **caractérisée en ce que** ledit courant qui passe dans ladite lampe (20) peut être réglé par modification de la référence de courant à laquelle est comparé le courant appliqué par ledit transformateur de courant (9).

7. Alimentation selon la revendication 6, **caractérisée en ce qu'**elle fournit l'amorçage desdites lampes, particulièrement de lampes à haute pression, au moyen de la résonance du circuit en sortie dudit étage de puissance (4), ladite résonance étant obtenue à une fréquence qui peut être atteinte par ledit étage de puissance (4), en ce qui concerne lesdites lampes à haute pression, en vertu de la présence, dans le circuit de sortie, dudit condensateur (8) et d'une bobine d'inductance saturable supplémentaire (7b) qui, lorsque la lampe (20) est allumée, tend à chuter au zéro, en ne laissant qu'à la première bobine d'inductance (7a) la tâche d'adapter ledit étage (4) à ladite lampe pour mettre en forme le courant et pour pouvoir le régler, en faisant varier la fréquence de fonctionnement.

8. Alimentation selon la revendication 7, **caractérisée en ce qu'**elle applique ladite résonance dudit circuit en sortie audit étage de puissance (4), en amenant ledit étage de puissance (4) à fonctionner, lorsque ladite lampe (20) est éteinte, à une fréquence variable, en utilisant la troisième harmonique de la tension engendrée dans le but de contenir la valeur de ladite bobine d'inductance saturable (7b) et dudit condensateur (8) en parallèle à ladite lampe (20), et la valeur maximale de la fréquence de fonctionnement dudit étage de puissance (4).

9. Alimentation selon les revendications 1 et 8, **caractérisée en ce que** ledit étage de puissance (4) comprend des semi-conducteurs comme des MOSFET, ou des MCT, ou des SCR, ou des ASCR, ou des GTO.

10. Alimentation selon une ou plusieurs des revendications précédentes, **caractérisée en ce que** ledit module de logique de commande (11) est capable d'attaquer ledit étage de puissance (4) avec une fréquence qui passe, en quelques dizaines de secondes, de 60 kHz à 20 kHz quelques temps avant obtention de l'amorçage, ledit module de logique de commande (11) modifiant le mode de fonctionnement lorsque l'arc a été amorcé et modifiant le balayage de l'intervalle de 60 à 20 kHz lors de la recherche de la résonance desdites bobines d'inductance (7) et dudit condensateur (8) pour régler le courant qui passe par ladite lampe (20), en modifiant ladite fréquence dans le but de maintenir constant ledit courant.

11. Alimentation selon une ou plusieurs des revendications précédentes, **caractérisée en ce que** la gestion de tout le traitement d'amorçage et de réglage de ladite lampe (20) est exécuté par un microprocesseur qui détecte si ladite lampe (20) est allumée ou éteinte, attaque ledit étage de puissance (4) à une fréquence variable jusqu'à ce que ladite lampe (20) soit éteinte et commence un réglage de fréquence lorsque ladite lampe (20) est allumée.

12. Alimentation selon une ou plusieurs des revendications précédentes, **caractérisée en ce qu'**elle est capable d'attaquer simultanément plusieurs lampes à haute pression ou plusieurs tubes au néon (10) en utilisant des bobines d'inductance individuelles (7) pour chacun desdits tubes au néon.

Fig.1

Fig.2

Fig.3

| CONTROL AND SLOW-START SIGNAL GENERATOR | VOLTAGE-CONTROLLED OSCILLATOR | GENERAL CONTROL UNIT, GENERATOR OF COLD AND WARM-START SEQUENCES (MICROPROCESSOR-BASED OR DISCRETE-LOGIC EXECUTION) |
| --- | --- | --- |
| RECTIFIER FOR THE CURRENT SENSED BY THE CURRENT TRANSFORMER | | PROTECTION AGAINST OVERLOADS AND SHORT-CIRCUITS, PROTECTION AGAINST UNDERVOLTAGES |

Fig. 4

13

**Fig. 5**

$$\frac{\overline{Vo}}{\overline{Vi}} = \frac{\dfrac{1}{jwC}}{R + \dfrac{1}{jwC} + jwL}$$

$$= \frac{\dfrac{1}{jwRC}}{1 + \dfrac{1}{jwRC} + \dfrac{jwL}{R}}$$

$$= \frac{\dfrac{1}{jwRC}}{1 + \dfrac{1}{jwRC} + \dfrac{jwL}{R}}$$

$$= \frac{\dfrac{\sqrt{L/C}}{jwR\sqrt{LC}}}{1 + \dfrac{\sqrt{L/C}}{jwR\sqrt{LC}} + \dfrac{jw\sqrt{LC}\sqrt{L/C}}{R}}$$

ASSUMING NOW THAT $Q = \dfrac{1}{R}\sqrt{\dfrac{L}{C}}$ , $w_o = \dfrac{1}{\sqrt{LC}}$

$$= \frac{\dfrac{Qw_o}{jw}}{1 + jQ\left(\dfrac{w}{w_o} - \dfrac{w_o}{w}\right)}$$

IF NOW $w = w_o$ THERE REMAINS

$$\overline{Vo} = \overline{Vi} * jQ , \text{WHICH IN MODULUS FORM IS} \; Vo = Vi * Q$$

Fig. 6

TOWARD THE CONTROL LOGIC UNIT

Fig.7

GENERAL CONTROL UNIT, STARTING SEQUENCE, GENERATOR. (MICROPROCESSOR WITH A/D)

VOLTAGE-CONTROLLED OSCILLATOR, CONTROL SIGNAL GENERATION

PROTECTION AGAINST OVERLOADS, SHORT-CIRCUITS, UNDERVOLTAGE